# FASCICULE DE BREVET EUROPEEN

(11) **EP 1 132 188 B1**
(45) Date de publication et mention de la délivrance du brevet: **01.03.2006**
(21) Numéro de dépôt: 01400110.1
(22) Date de dépôt: 16.01.2001
(51) Int. Cl.: B29C 45/00

(54) **Procédé de fabrication de composants pour dispositifs d'éclairage ou de signalisation de véhicules automobiles**
Verfahren zur Herstellung von Komponenten für Beleuchtungs- oder Signalvorrichtungen für Kraftfahrzeuge
Method for producing components for lighting or signaling devices for motor vehicles

(30) Priorité: 08.03.2000 FR 0003000
(43) Date de publication de la demande: 12.09.2001
(73) Titulaire: VALEO VISION, 93012 Bobigny Cédex (FR)
(72) Inventeur: Ortiz, José, 93012 Bobigny Cedex (FR)

(56) Documents cités:
- EP-A- 0 630 955
- EP-A- 0 790 115
- DE-A- 4 401 813

## Description

La présente invention concerne le domaine de la fabrication de composants optiques pour dispositifs d'éclairage ou de signalisation de véhicules automobiles, ainsi que pour dispositifs d'éclairage en général (domestique, industriel, urbain, etc.). De tels composants peuvent par exemple être des réflecteurs, ou des pièces d'aspect telles que des masques de réflecteur.

De manière plus précise, la présente invention concerne un procédé de fabrication de tels composants optiques par injection, en une seule étape, dans un moule, d'une composition polymère à l'état fondu.

Pour la fabrication de composants optiques ou de pièces d'aspect, tels que des miroirs ou des masques, etc., on utilise pour la mise en oeuvre de procédés de fabrication des polymères thermoplastiques ou thermodurcissables.

D'une manière générale, les composants obtenus par la mise en oeuvre de l'un des procédés connus présentent de nombreux inconvénients. En effet, dans la plupart des cas, les charges (minérales ou fibreuses), qui permettent d'améliorer les propriétés mécaniques, dégradent en général l'état de surface, ou la brillance, ainsi que l'aspect, par la présence de taches blanchâtres. Par exemple, les valeurs de brillance obtenues pour ce type de composants sont en général inférieures à ceux d'un thermoplastique amorphe, pour lequel les valeurs de brillance mesurées, par exemple à l'aide d'un appareil BYK-GARDNER HAZE-GLOSS, dépassent 160 : pour le polycarbonate, les valeurs de brillance sont de l'ordre de 180.

Pour remédier à ce type d'inconvénients, il est nécessaire de déposer sur les surfaces un vernis ou une couche de préparation avant d'appliquer une couche métallique réfléchissante. Une telle couche de préparation peut être constituée d'un vernis ou d'un dépôt de polymère sous vide.

D'autres solutions font appel à des techniques relativement complexes telles que la technique d'injection/moulage « bi-matière », par laquelle on injecte successivement une matière thermoplastique pour former une peau ayant de bonnes propriétés de surface, puis une matière thermodurcissable ou thermoplastique chargée pour former une âme ayant de bonnes propriétés mécaniques (voir par exemple les brevets français FR-A-2 758 128 et FR-A-2 643 849).

Une autre solution consiste à améliorer l'état de surface de pièces injectées avec certains thermoplastiques chargés, par mélange d'une faible quantité (10 à 15% en poids) de polytéréphtalate d'éthylène à ces thermoplastiques.

On connaît par exemple du document EP-B-0 630 955 une composition de résine polyester contenant des charges, notamment des charges d'aluminium, et du document EP-A-0 947 763 un réflecteur qui nécessite une couche de matériau polyimide ou polyamide aromatique déposée sous vide, dans le but d'améliorer les propriétés réfléchissantes.

D'autres formulations disponibles sur le marché contiennent des additifs liquidés ou en solution (à la température ambiante), ou des composants solides, mais dont la tension de vapeur à la température d'utilisation engendre un problème de dégazage avec condensation dans les zones les plus froides, connu dans la technique sous le terme anglo-saxon de " fogging ".

On connaît également pour une utilisation dans le domaine de l'éclairage des copolyesters aromatiques du type polymère à cristaux liquides (LCP ou Liquid Crystal Polymer) qui contiennent des charges minérales permettant d'améliorer les propriétés mécaniques du produit fini. Cependant, les différentes qualités de LCP contenant des charges et disponibles sur le marché ne permettent pas d'obtenir les mêmes performances en réflexion qu'un réflecteur réalisé par exemple en un matériau thermodurcissable, tel qu'un BMC (Bulk Moulding Compound ou Thermodur) ou une résine époxyde, ou en métal (tôle ou alliage), tous ces matériaux étant munis d'un vernis avant métallisation, ou encore en un thermoplastique amorphe sans charge, par exemple en Polyetherimide (PEI), en Polycarbonate (PC), en Polyethersulfone (PES), tout en ayant les propriétés mécaniques et thermiques requises dans ce type d'application.

D'autres copolyesters aromatiques de type LCP peuvent être utilisés sans charges, mais leur faible viscosité pose alors d'autres problèmes de mise en oeuvre, par exemple des problèmes d'infiltrations dans le plan du joint du moule, dans les évents, ainsi que des problèmes de maîtrise de l'état de surface, les surfaces obtenues étant non uniformes ou irrégulières.

La présente invention se place dans ce contexte et elle a pour but de proposer un procédé de réalisation de composants optiques, en utilisant une composition polymère dont les propriétés, et notamment la viscosité, puissent être modifiées par l'adjonction de charges à base de silicates ou d'autres polymères, sans qu'il y ait dégradation des propriétés mécaniques et/ou thermiques du composant obtenu ni de son état de surface de manière à s'affranchir des couches de préparation habituellement utilisées avant la métallisation leur conférant par exemple un pouvoir réfléchissant élevé, le composant obtenu ne subissant en outre pas de phénomène de dégazage, ou seulement un très faible dégazage.

Dans ce but, l'invention concerne un procédé de fabrication de composants pour dispositifs d'éclairage ou de signalisation de véhicules automobiles, par injection en une seule étape dans un moule d'une composition polymère, comportant les étapes suivantes :
- on mélange une composition polymère avec des charges,
- on chauffe le mélange pour qu'il atteigne une première température prédéterminée d'injection à laquelle il est à l'état fondu,
- on injecte le mélange dans une empreinte formée entre des parois d'un moule,
- on refroidit les parois du moule à une deuxième température prédéterminée de refroidissement,
- on éjecte la pièce moulée et refroidie.

Selon la présente invention, la composition polymère est une résine polyester polymère à cristaux liquides, et les charges augmentent la viscosité du mélange lorsqu'il a atteint la première température prédéterminée.

Selon un aspect de l'invention, les charges appartiennent à la famille des silicates.

Dans ce cas, on peut prévoir que ces charges soient des nanocharges, des silicates organiques, ou des silicates minéraux.

Selon un autre aspect de l'invention, les charges appartiennent au groupe des polymères techniques.

Dans tous les cas, il est avantageux de prévoir que la première température prédéterminée d'injection soit comprise entre 300 °C et 380 °C.

De même, il est avantageux de prévoir que la deuxième température prédéterminée de refroidissement soit comprise entre 150 °C et 250 °C.

De préférence, la deuxième température prédéterminée de refroidissement est voisine de 220 °C.

De manière avantageuse, le procédé selon la présente invention comporte, directement après l'étape d'éjection de la pièce moulée et refroidie, l'étape supplémentaire de métallisation d'une surface de la pièce.

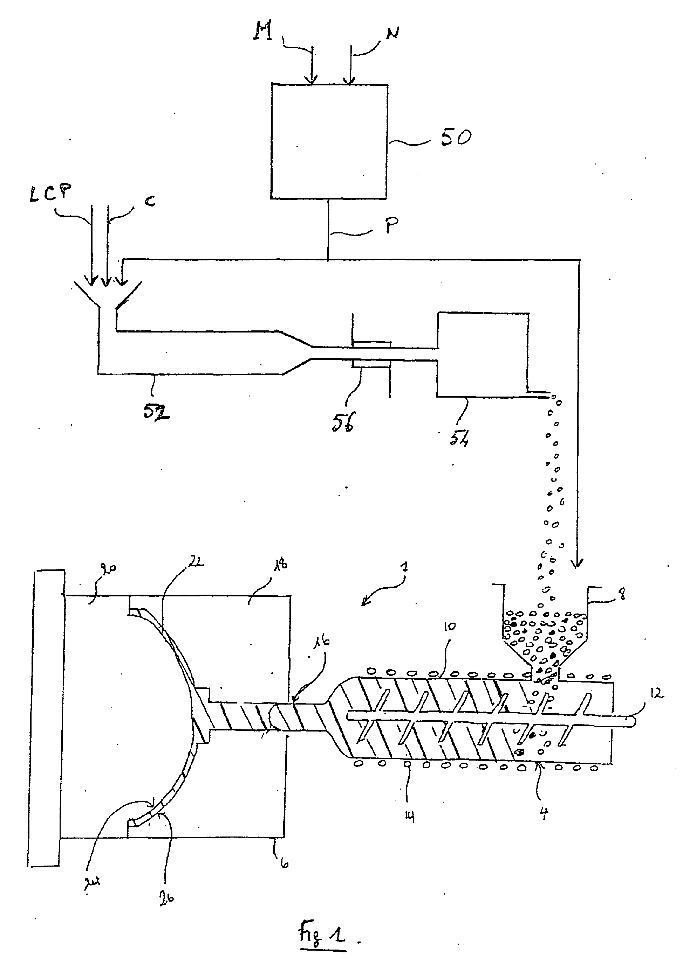

D'autres buts, caractéristiques et avantages de la présente invention ressortiront clairement de la description qui va maintenant être faite d'un exemple de réalisation donné à titre non limitatif en référence aux dessins annexés sur lesquels : la Figure unique représente schématiquement en coupe longitudinale un exemple d'installation d'injection, pressage et moulage, pour la mise en oeuvre du procédé selon la présente invention.

On a représenté sur la Figure unique une installation 1 d'injection, pressage et moulage comprenant un cylindre d'injection 4, un moule 6 et une trémie 8. Le cylindre d'injection 4 comporte principalement un fourreau 10, une vis sans fin 12, des moyens de chauffage 14 et une buse 16.

Une résine polyester polymère à cristaux liquides LCP, par exemple disponible sous l'appellation " Thermx LCP LN 001 ", est mélangée avec des charges minérales ou fibreuses, de manière à augmenter la viscosité du mélange résine/charge en résultant, et elle est introduite dans la trémie 8 du cylindre d'injection 10.

Dans la présente description, le terme de « charge » est utilisé pour désigner un matériau ajouté à la résine polyester polymère initiale, le pourcentage en poids de ce matériau ajouté étant inférieur à 50%.

La résine chargée est obtenue, selon un mode de réalisation, par mélange de monomères M et de nanocharges N dans un réacteur de polymérisation 50, de manière à obtenir un polymère chargé P qui peut être introduit directement dans la trémie 8 du cylindre d'injection 10.

Selon un autre mode de réalisation, un polymère à cristaux liquides LCP et des charges C sont introduites dans une extrudeuse co-rotative 52. En variante, on peut prévoir d'introduire le polymère chargé P obtenu en sortie du réacteur 50 avec d'autres charges C dans l'extrudeuse 52. Le produit de l'extrusion est introduit dans une granulatrice 54, après avoir été éventuellement refroidi dans un échangeur de chaleur ou un bac à eau 56. Les granulés obtenus, après avoir été préalablement séchés si nécessaire, sont alors introduits dans la trémie 8 du cylindre d'injection 10.

Selon un aspect de la présente invention, les charges présentes dans le mélange introduit dans la trémie 8 peuvent être de faible granulométrie, et connues sous le nom de " nanocharges ", ou sous leur appellation anglo-saxonne de " nanofillers ". Les nanocharges de faible granulométrie permettent d'augmenter la viscosité du matériau fondu sans dégrader de façon appréciable la brillance spéculaire.

Le terme de nanocharges désigne des charges constituées de particules qui possèdent au moins une de leurs dimensions, la hauteur, la largeur ou la longueur, de l'ordre du nanomètre. Si ces particules ont deux ou trois dimensions de cet ordre de grandeur, elles peuvent alors être invisibles à l'oeil nu. Typiquement, on trouve des charges formées de particules dont la plus petite dimension est comprise entre quelques dixièmes de nanomètre (par exemple 0,3 nm) et quelques centaines de nanomètres (par exemple 300 nm).

Dans certains cas où les particules constituant la charge ont des dimensions trop importantes, par exemple quand la plus petite dimension est de l'ordre de quelques microns (quelques milliers de nanomètres), on réduit la dimension de ces particules en leur faisant subir un cisaillement important lors de l'opération connue sous le nom de « compoundage », à l'aide de l'extrudeuse co-rotative 52, de manière à désagréger ou exfolier ces particules, et diminuer ainsi leur taille pour qu'elles aient au moins une de leurs dimensions de l'ordre du nanomètre. Les charges peuvent également être micronisées pour réduire leur taille avant de les introduire dans l'extrudeuse 52. Les charges peuvent aussi être rendues compatibles chimiquement afin d'augmenter leur affinité avec le polymère LCP.

Selon un autre aspect de l'invention, les charges utilisées peuvent être organiques, par exemple des silicates organiques, sous forme lamellaire ou pulvérulente.

Selon encore un autre aspect de l'invention, les charges utilisées peuvent également être minérales, de type silicates, par exemple des silicates d'aluminium, des silicates d'aluminium magnésium, contenant d'autres métaux ou non. De telles charges minérales peuvent de présenter sous forme lamellaire comme le mica ou le talc, sous forme fibrillaire comme la Wollastonnite, ou sous forme pulvérulente. Ces charges minérales permettent de conserver la brillance spéculaire du substrat, et elles contribuent à augmenter la viscosité du matériau fondu. Les charges minérales peuvent être utilisées dans des proportions comprises entre 10 et 50%.

Selon un autre mode de réalisation, on peut utiliser d'autres polymères pour augmenter la viscosité de la résine polyester, sans dégrader les propriétés du produit final. On peut par exemple ajouter à la résine polyester d'autres matériaux polymères choisis parmi le groupe des " polymères techniques ", comprenant les polyimides (PI), les polyethersulfone (PES), les polyphénylsulfone (PPS), les polyamides aromatiques, ou d'autres polyesters qui peuvent être partiellement ou complètement aromatiques. On peut par exemple utiliser des thermoplastiques techniques en quantités minoritaires par rapport au polymère principal (généralement inférieures à 15%).

Ces polymères techniques peuvent contenir eux-mêmes ou non des charges, qui peuvent être pulvérulentes, lamellaires, fibrillaires ou des nanocharges. Dans le cas où ces matériaux seraient eux-mêmes chargés, le pourcentage total de charge est inférieur à 15%. Dans ce cas, on peut alors encore ajouter un troisième constituant en un matériau polymère, pour assurer une meilleure compatibilité entre les différents constituants. De même, ces polymères techniques peuvent être utilisés seuls pour constituer la charge de la résine polyester polymère, ou être utilisés en plus des nanocharges mentionnées précédemment.

Les charges, nanocharges ou polymères techniques, sont incorporées dans la résine polyester polymère à cristaux liquides LCP, éventuellement à l'aide de l'extrudeuse co-rotative 52 alimentant la granulatrice 54. L'extrudeuse co-rotative 52 a pour effet de cisailler les particules constituant la charge, et d'assurer une bonne dispersion des constituants.

Alternativement, les polymères techniques peuvent être mélangés avec le polymère LCP, préalablement ou simultanément à leur introduction dans la trémie 8 du cylindre d'injection 4.

Comme exemples de mélanges utilisables, on peut citer par exemple :
- un mélange de résine polyester polymère à cristaux liquides LCP, par exemple disponible sous l'appellation " Thermx LCP LN 001 ", et de 4% en poids de nanocharges, par exemple disponible sous l'appellation " Nanomer I.30TC, de la société " Nanocor ",
- un mélange de résine Thermx LCP LN 001, et de 25% en poids de Wollastonite, et 2% en poids de noir de carbone,
- un mélange de résine Thermx LCP LN 001, et de 5% en poids de polyphénylsulfone PPS, préalablement mélangés avant leur introduction dans la trémie 8, ou
- un mélange de résine polyester polymère à cristaux liquides LCP, par exemple disponible dans le commerce sous l'appellation Zenite E86889-58-2, contenant des charges minérales, et de 8% en poids de polyphénylsulfone PPS et de 2% en poids de Polyétherimide PEI, les granulés de ces polymères étant mélangés avant leur introduction dans la trémie 8.

L'un de ces mélanges est introduit dans la trémie 8 sous forme de granulés, et s'écoule de la trémie 8 dans le fourreau 10, puis est entraîné dans celui-ci grâce à la vis 12. Le mélange est acheminé dans le fourreau 10 en direction du moule 6. Grâce aux moyens de chauffage 14, disposés sur les parois du fourreau 10, le mélange est chauffé et porté à l'état fondu, c'est à dire liquide ou pâteux.

Le moule comporte un poinçon 18 et une matrice 20. Le poinçon 18 et la matrice 20 sont assemblés de manière à ménager, dans une position particulière et précisément définie, un espace entre eux définissant une empreinte de moulage 22.

Si la matrice 20 est fixe, le poinçon 18 est mobile et inversement. Plus précisément, le poinçon 18 délimite l'empreinte 22 par une face convexe de moulage 24, et la matrice 20 délimite l'empreinte 22 par une face concave de moulage 26.

Au cours de l'étape de remplissage, la composition à l'état fondu est injectée par la buse 16 dans l'empreinte 22. La température d'injection au niveau du fourreau est comprise entre 320°C et 360 °C. Vient ensuite une étape de refroidissement, pendant laquelle la température de la pièce se rapproche de celle du moule qui est refroidi par un agent réfrigérant à proximité de l'empreinte 22. La température du moule est comprise entre 150 °C et 250 °C. De préférence, la température du moule est voisine de 220 °C. La pièce moulée et refroidie est alors suffisamment rigide pour résister aux efforts de l'éjection, qui peuvent alors intervenir.

Ces conditions de transformation sont telles qu'elles permettent d'avoir une fine peau en résine de polymère à cristal liquide avec un très bon état de surface.

Comme on peut le voir sur la Figure unique, les pièces fabriquées, par exemple des réflecteurs, ont une épaisseur faible par rapport à leur longueur et/ou leur largeur. Typiquement, l'épaisseur de telles pièces est inférieure au millimètre.

Une fois éjectée, la pièce ainsi fabriquée peut être directement métallisée de façon à avoir les propriétés réflectrices voulues, sans qu'il soit besoin de déposer de couche de préparation, telle qu'un " primer " ou une couche polymère déposée sous vide ou par un autre traitement.

Une telle métallisation peut être réalisée selon l'une des technologies utilisées dans la technique, comme par exemple une métallisation par évaporation sous vide, une métallisation par pulvérisation cathodique ou une métallisation par électrolyse (par exemple chromage). La métallisation par électrolyse peut comprendre une attaque chimique avec un bain acide, suivie d'une activation, puis d'un dépôt chimique d'une couche de métallisation, puis d'un dépôt électrolytique d'une ou plusieurs couches de métallisation.

Les pièces obtenues selon le procédé qui vient d'être décrit présentent une surface régulière et un bon niveau de brillance qui permet leur utilisation pour réaliser un réflecteur de projecteur ou de feu de signalisation de véhicule automobile. Les pièces obtenues ont de plus les propriétés mécaniques voulues, et leur état de surface est tel qu'il ne requiert aucune couche de préparation préalable à une métallisation.

Bien entendu, la présente invention n'est pas limitée au mode de réalisation qui a été décrit, mais elle est susceptible au contraire de recevoir de nombreuses variantes qui rentrent dans son cadre. C'est ainsi par exemple que les matériaux ajoutés à la composition polymère de départ peuvent comprendre en plus de très faibles doses d'un agent ignifugeant. C'est ainsi également que, en plus des charges mentionnées dans la présente description, on pourra ajouter des additifs, de faible tension de vapeur, de manière à ce que ces additifs ne provoquent pas de phénomènes de dégazage.

## Revendications

1. Procédé de fabrication de composants pour dispositifs d'éclairage ou de signalisation de véhicules automobiles, par injection en une seule étape dans un moule d'une composition polymère, comportant les étapes suivantes :
- on mélange une composition polymère avec des charges,
- on chauffe le mélange pour qu'il atteigne une première température prédéterminée d'injection à laquelle il est à l'état fondu,
- on injecte le mélange dans une empreinte (22) formée entre des parois (24, 26) d'un moule,
- on refroidit les parois (24, 26) du moule à une deuxième température prédéterminée de refroidissement,
- on éjecte la pièce moulée et refroidie,
- la composition polymère étant une résine polyester polymère à cristaux liquides (LCP),
le procédé étant **caractérisé en ce que** les charges augmentent la viscosité du mélange lorsqu'il a atteint la première température prédéterminée.

2. Procédé selon la revendication 1, **caractérisé en ce que** les charges appartiennent à la famille des silicates.

3. Procédé selon la revendication 2, **caractérisé en ce que** les charges de la famille des silicates sont des nanocharges.

4. Procédé selon la revendication 2, **caractérisé en ce que** les charges de la famille des silicates sont des silicates organiques.

5. Procédé selon la revendication 2, **caractérisé en ce que** les charges de la famille des silicates sont des silicates minéraux.

6. Procédé selon la revendication 1, **caractérisé en ce que** les charges appartiennent au groupe des polymères techniques.

7. Procédé selon l'une quelconque des revendications 1 à 6, **caractérisé en ce que** la première température prédéterminée d'injection est comprise entre 300 °C et 380 °C.

8. Procédé selon l'une quelconque des revendications 1 à 6, **caractérisé en ce que** la deuxième température prédéterminée de refroidissement est comprise entre 150 °C et 250 °C.

9. Procédé selon la revendication 8, **caractérisé en ce que** la deuxième température prédéterminée de refroidissement est voisine de 220 °C.

10. Procédé selon l'une quelconque des revendications 1 à 9, **caractérisé en ce qu'**il comporte, directement après l'étape d'éjection de la pièce moulée et refroidie, l'étape supplémentaire de métallisation d'une surface de la pièce.

11. Procédé selon l'une quelconque des revendications précédentes, **caractérisé en ce que** la composition polymère est mélangée avec des charges et des additifs à faible tension de vapeur.

## Patentansprüche

1. Verfahren zum Herstellen von Bauteilen für Beleuchtungs- oder Signalvorrichtungen von Kraftfahrzeugen durch Spritzgießen einer Polymerzusammensetzung in ein Werkzeug in einem Arbeitsschritt, das die folgenden Schritte umfasst:
- Mischen einer Polymerzusammensetzung mit Füllstoffen,
- Erhitzen der Mischung, damit sie eine erste vorbestimmte Spritzgießtemperatur erreicht, bei der sie im geschmolzenen Zustand ist,
- Einspritzen der Mischung in ein erstes Formriest (22), das zwischen den Wänden (24, 26) eines Werkzeugs gebildet ist,
- Abkühlen der Wände (24, 26) des Werkzeugs auf eine zweite vorbestimmte Kühltemperatur,
- Auswerfen des abgekühlten Spritzgussteils,
- wobei die Polymerzusammensetzung ein Polyesterharz aus flüssig-kristallinem Polymer (LCP) ist,
wobei das Verfahren **dadurch gekennzeichnet ist, dass** die Füllstoffe die Viskosität der Mischung erhöhen, wenn diese die erste vorbestimmte Temperatur erreicht hat.

2. Verfahren nach Anspruch 1,
**dadurch gekennzeichnet, dass** die Füllstoffe aus der Familie der Silikate stammen.

3. Verfahren nach Anspruch 2,
**dadurch gekennzeichnet, dass** die Füllstoffe aus der Familie der Silikate Nanofüllstoffe sind.

4. Verfahren nach Anspruch 2,
**dadurch gekennzeichnet, dass** die Füllstoffe aus der Familie der Silikate organische Silikate sind.

5. Verfahren nach Anspruch 2,
**dadurch gekennzeichnet, dass** die Füllstoffe aus der Familie der Silikate anorganische Silikate sind.

6. Verfahren nach Anspruch 1,
**dadurch gekennzeichnet, dass** die Füllstoffe aus der Gruppe der technischen Polymere stammen.

7. Verfahren nach einem der Ansprüche 1 bis 6,
**dadurch gekennzeichnet, dass** die erste vorbestimmte Spritzgießtemperatur zwischen 300°C und 380°C beträgt.

8. Verfahren nach einem der Ansprüche 1 bis 6,
**dadurch gekennzeichnet, dass** die zweite vorbestimmte Kühltemperatur zwischen 150°C und 250°C beträgt.

9. Verfahren nach Anspruch 8,
**dadurch gekennzeichnet, dass** die zweite vorbestimmte Kühltemperatur ungefähr 220°C beträgt.

10. Verfahren nach einem der Ansprüche 1 bis 9,
**dadurch gekennzeichnet, dass** es unmittelbar nach dem Auswerfen des abgekühlten Spritzgussteils einen weiteren Schritt zum Metallisieren einer Oberfläche des Gussteils umfasst.

11. Verfahren nach einem der vorhergehenden Ansprüche,
**dadurch gekennzeichnet, dass** die Polymerzusammensetzung mit Füllstoffen und Additiven mit geringem Dampfdruck gemischt wird.

## Claims

1. Method of manufacturing components for motor vehicle lighting or signalling devices by injecting a polymer composition in a single step in a mould, comprising the following steps:
- a polymer composition is mixed with fillers,
- the mixture is heated so that it reaches a first predetermined injection temperature at which it is in the molten state,
- the mixture is injected into a cavity (22) formed between walls (24, 26) of a mould,
- the walls (24, 26) of the mould are cooled to a second predetermined cooling temperature,
- the moulded and cooled part is ejected,
- the polymer composition being a liquid crystal polymer (LCP) polyester resin,
the method being **characterised in that** the fillers increase the viscosity of the mixture when it has reached the first predetermined temperature.

2. Method according to claim 1, **characterised in that** the fillers belong to the silicate family.

3. Method according to claim 2, **characterised in that** the fillers in the silicate family are nanofillers.

4. Method according to claim 2, **characterised in that** the fillers in the silicate family are organic silicates.

5. Method according to claim 2, **characterised in that** the fillers in the silicate family are mineral silicates.

6. Method according to claim 1, **characterised in that** the fillers belong to the group of technical polymers.

7. Method according to any one of claims 1 to 6, **characterised in that** the first predetermined injection temperature is between 300°C and 380°C.

8. Method according to any one of claims 1 to 6, **characterised in that** the second predetermined cooling temperature is between 150°C and 250°C.

9. Method according to claim 8, **characterised in that** the second predetermined cooling temperature is around 220°C.

10. Method according to any one of claims 1 to 9, **characterised in that** it comprises, directly after the step of ejecting the moulded and cooled part, the supplementary step of metallisation of a surface of the part.

11. Method according to any one of the preceding claims, **characterised in that** the polymer composition is mixed with fillers and additives with low vapour tension.
